# FASCICULE DE BREVET EUROPEEN

(11) **EP 1 646 194 B1**
(45) Date de publication et mention de la délivrance du brevet: **12.09.2007**
(21) Numéro de dépôt: 05300630.0
(22) Date de dépôt: 29.07.2005
(51) Int. Cl.: H04L 12/58

(54) **Procédé de production d'un accusé de réception fiable**
Produktionsverfahren einer zuverlässigen Empfangsbestätigung
Method for producing a reliable delivery acknowledgement

(30) Priorité: 08.10.2004 FR 0452326
(43) Date de publication de la demande: 12.04.2006
(73) Titulaire: Sagem Communication, 75512 Paris cedex 15 (FR)
(72) Inventeur: De Barros, Luis, 78230 Le Pecq (FR); Fourques, Nicolas, 95300, Pontoise (FR)
(74) Mandataire: Schmit, Christian Norbert Marie

(56) Documents cités:
- WO-A-00/42748
- WO-A-02/23785
- WO-A-02/093849
- US-A- 6 137 884

## Description

L'invention a pour objet un procédé de production d'un accusé de réception fiable dans le cadre de l'échange de courriers / messages électroniques. Le domaine de l'invention est celui des messageries électroniques. Dans ce domaine, et pour l'invention, on considère comme un message électronique au moins un courriel, mais aussi un SMS, un MMS ou tout autre forme de message électronique pour lesquels il peut être intéressant d'obtenir un accusé de réception fiable.

Un but de l'invention est la production d'un accusé de réception fiable faisant suite à l'envoi d'un message électronique. Un tel accusé de réception est dit fiable en particulier si on ne peut accéder au contenu d'un message, et d'éventuels fichiers joints, sans provoquer l'émission dudit accusé de réception.

Dans l'état de la technique on connaît des procédés permettant d'envoyer un premier courriel en demandant à la personne recevant le premier courriel de renvoyer un deuxième courriel en réponse, de manière plus ou moins automatisée. Dans ce mode opératoire le premier courriel comporte un champ AR indiquant si son expéditeur souhaite ou non recevoir un accusé de réception. Ce champ est traité par le logiciel servant au destinataire du premier courriel à recevoir et lire ledit premier courriel. Un tel logiciel est connu sous le nom de client de messagerie. Un tel logiciel permet au moins l'émission, la réception, l'édition, et l'archivage de messages électroniques. Un tel logiciel, lorsqu'il traite un message comportant un champ AR demandant l'émission d'un accusé de réception, demande à l'utilisateur du logiciel recevant le message s'il veut émettre un accusé de réception. L'utilisateur est alors libre d'émettre, ou de ne pas émettre, un message de confirmation de réception/lecture. Un tel accusé de réception n'est donc pas fiable, car l'utilisateur peut prendre connaissance du message sans émettre d'accusé de réception. La personne ayant émis le message ne saura alors jamais si son message a été correctement reçu/lu. De plus, si le client de messagerie ne traite pas le champ AR, alors ce procédé est totalement inefficace. Ce procédé est donc au mieux soumis à la bonne volonté des personnes recevant un message, ce qui n'est pas acceptable dans le cadre de la production d'un accusé de réception. En effet ce n'est pas au destinataire d'un message de décider s'il souhaite déclarer avoir reçu un message ou non.

Dans l'état de la technique on connaît aussi un procédé mettant en oeuvre un dispositif tiers. Un tel procédé est connu sous le nom de 'webmail'. Dans ce procédé un utilisateur utilise un navigateur/explorateur Internet pour se connecter à un site web hébergé par le dispositif tiers. Ce site web propose les mêmes fonctionnalités qu'un client de messagerie, mais il est contrôlé non par l'utilisateur, mais par l'entité propriétaire du dispositif tiers. Cette entité est la plupart du temps un prestataire de service souvent tiraillé entre les intérêts parfois contradictoires de ses clients. En effet, par ce procédé on peut émettre et/ou recevoir des courriers électroniques, et donc souhaiter recevoir ou ne pas émettre d'accusé de réception. C'est le prestataire qui décide si des accusés de réception doivent être produit, et si cette production doit être laissée à la convenance du destinataire du message. Ce procédé présente donc potentiellement les mêmes faiblesses que le premier. De plus ce procédé impose à un utilisateur d'être connecté au dispositif tiers pour pouvoir consulter, ou re-consulter des messages. Les navigateurs proposent bien de gérer des mémoires caches mais une telle solution n'est pas fiable. En effet ces mémoires caches sont régulièrement effacées et leur contenu peut être contrôlé par des instructions incluses dans les entêtes des pages Internet constituant le site Internet. Il reste encore une solution d'enregistrement de la page Internet présentant le message, mais au minimum cette solution impose à l'utilisateur d'avoir à gérer les enregistrements des ses messages sur son propre poste, et en particulier de mettre en place une politique lui permettant de retrouver et parcourir ses messages enregistrés. Cela revient à recréer ce qui existe déjà dans les clients de messagerie, à savoir un système d'archivage et de gestion des messages.

Dans l'état de la technique, on connaît aussi des systèmes faisant intervenir un serveur tiers auquel le message est envoyé alors que seule une notification est envoyée au destinataire. Pour lire le message qui lui a été envoyé, le destinataire doit aller récupérer le message sur le serveur tiers, via la consultation d'une page web par exemple. Le serveur détecte la récupération du message par le destinataire et envoi un accusé de réception à l'expéditeur du message. Ce système fournit un accusé de réception fiable mais impose à l'utilisateur d'être connecté au dispositif tiers pour pouvoir consulter, ou re-consulter des messages.

Dans l'état de la technique, on connaît aussi le document EP1387239 décrivant un système d'envoi de message sécurisé. Cependant ce système suppose la réception de plusieurs messages par l'utilisateur destinataire, notamment d'un message d'identification, et surtout impose à l'utilisateur de multiple saisie, en particulier d'un code d'identification. L'utilisateur destinataire a aussi à gérer la réception de plusieurs messages pour la réception d'un seul contenu, ce qui pose un problème pour la consultation ultérieure du message. De plus ce document décrit le fait d'envoyer un message chiffré comme inadéquat ce qui est faut.

Dans l'invention on résout ces problèmes dès la création d'un message numérique. Un bouton/menu/case à cocher spécial est sélectionné dans un client de messagerie pour la création d'un nouveau message. Le fait d'utiliser ce bouton/menu/case à cocher indique que le procédé selon l'invention est utilisé pour la création du nouveau message. Un message numérique selon l'invention comporte les éléments édités par l'utilisateur du client de messagerie, ces éléments étant identiques à ceux que tout client de messagerie permet d'insérer dans un message numérique, en particulier du texte et éventuellement des pièces jointes. Dans l'invention ce texte est chiffré, ainsi que le nom des éventuelles pièces jointes. Ce contenu chiffré est incorporé dans un contenu actif utilisant un langage de script interprétable par les clients de messagerie classique. Une fois cette incorporation faite, le message est envoyé à son destinataire alors que la clé de déchiffrement est envoyée vers un serveur de validation des réceptions. Eventuellement, cette clef de déchiffrement peut être chiffrée avec la clef publique dudit serveur. Dans ce cas, ce serveur étant le seul à connaître sa propre clé privée, il sera le seul à même de déchiffrer cette clef de déchiffrement avant de la remettre au destinataire lorsque celui-ci en fera la demande. Les pièces jointes sont ensuite envoyées vers un serveur de pièces jointes. Eventuellement, ces pièces jointes peuvent être chiffrées à l'aide d'une clef symétrique pseudo-aléatoire elle-même chiffrée à l'aide de la clef publique du serveur de pièces jointes avant d'être envoyée avec le fichier concerné. Dans ce cas, les pièces jointes considérées seront déchiffrées par ledit serveur avant leur récupération par le destinataire. Ce chiffrement éventuel de la clef de déchiffrement et des pièces jointes n'est pas obligatoire mais permet d'élever le niveau de sécurité du système.

Le message électronique ainsi formaté est reçu par son destinataire. Sa consultation nécessite alors l'activation du contenu actif du message. Une fois activé, ce contenu actif va se connecter au serveur de validation pour récupérer la clé de chiffrement / déchiffrement, déchiffrer le message, récupérer les éventuelles pièces jointes, présenter le message déchiffré à l'utilisateur, l'enregistrer à une localisation prédéterminée sur le poste de l'utilisateur destinataire, et modifier le message reçu dans le client de messagerie de manière à ce que toute consultation ultérieure se fasse via l'enregistrement local du message. Lorsque le client de messagerie, mettant en oeuvre le contenu actif, se connecte au serveur de validation des réceptions, il provoque l'émission par le serveur de validation des réceptions d'un accusé de réception qui est adressé à l'émetteur du message.

Dans l'invention on résout tous les problèmes de confidentialité. D'une part seule la personne destinataire du message est intéressée par l'obtention de la clé de déchiffrement. Si une autre personne l'obtient, il faudra aussi obtenir le message lui-même. D'autre part le message est transmis chiffré, ce qui garantit la confidentialité.

Ainsi dans l'invention un utilisateur destinataire d'un message ne peut consulter un message sans qu'un accusé de réception ne soit envoyé à l'émetteur. Cet accusé de réception est émis automatiquement par le serveur de validation.

L'invention a donc pour objet un procédé de production d'un accusé de réception fiable dans lequel un utilisateur émetteur d'un message produit un premier message puis le valide pour envoi à un destinataire identifié par une adresse destinataire, l'émetteur étant identifié par une adresse émetteur caractérisé en ce que:
- le premier message est transmis à un poste de formatage,
- le poste formatant le premier message produit une clé de chiffrement/déchiffrement,
- le poste formatant le premier message chiffre le premier message avec la clé de chiffrement/déchiffrement produit, produisant ainsi des informations chiffrées,
- le poste formatant le premier message, produit un deuxième message comportant les informations chiffrées et un contenu actif apte à effectuer le déchiffrement des informations chiffrées mais n'ayant pas connaissance de la clé de déchiffrement,
- le poste formatant le premier message, produit un troisième message comportant le deuxième message et un premier lien dont la sélection permet d'activer le contenu actif du deuxième message, ce premier lien étant visible au moins lors du premier affichage du troisième message par le destinataire du premier message,
- le poste formatant le premier message émet le troisième message ainsi formaté à destination du destinataire identifié par l'adresse destinataire,
- le poste formatant le premier message émet la clé de chiffrement/déchiffrement vers un serveur de validation des réceptions, le serveur de validation étant apte à émettre un accusé de réception lorsque qu'il reçoit une requête pour émettre une clé de chiffrement/déchiffrement, une clé de chiffrement/déchiffrement étant associée à un message formaté.

De manière complémentaire, le message produit et émis devant être reçu et traité, l'invention a aussi pour objet un procédé de production d'un accusé de réception fiable dans lequel un utilisateur destinataire d'un premier message reçoit un message via un poste de réception caractérisé en ce que:
- le message reçu comporte un premier lien visible au moins lors de la première visualisation du message reçu et activable, l'activation de ce premier lien permettant d'activer un contenu actif d'un deuxième message contenu dans le message reçu, ce deuxième message comportant également des informations chiffrées, le message reçu étant un troisième message,
- une fois le contenu actif activé:

- le poste de réception se connecte à un serveur de validation des réceptions pour obtenir une clé de déchiffrement des informations chiffrées, le serveur de validation des réceptions émettant une notification à l'utilisateur ayant déposé la clé de déchiffrement, cette notification valant accusé de réception du premier message,
- le poste de réception déchiffre les informations chiffrées et les présente à l'utilisateur destinataire.

Avantageusement l'invention est aussi caractérisée en ce que le premier message comporte au moins une pièce jointe identifiée par un nom, dans ce cas:
- le poste formatant le message chiffre le nom de pièce jointe avec la clé de chiffrement/déchiffrement produite, et incorpore le résultat du chiffrement aux informations chiffrées,
- le poste formatant le premier message émet au moins la pièce jointe vers un serveur de pièces jointes.

Avantageusement l'invention est aussi caractérisée en ce que le poste de réception récupère, le cas échéant, des pièces jointes dont les noms sont contenus dans les informations déchiffrées, ces pièces jointes étant enregistrées sur un serveur de pièces jointes.

Avantageusement l'invention est aussi caractérisée en ce que une fois la clé de chiffrement et les éventuelles pièces jointes récupérées par le destinataire, le premier message et les éventuelles pièces jointes sont enregistrées, en tant que quatrième message, sur le poste de réception ayant servi au destinataire à recevoir le troisième message, cet enregistrement étant réalisé à un endroit prédéterminé d'une unité de stockage du poste de réception.

Avantageusement l'invention est aussi caractérisée en ce que le quatrième message est chiffré à l'aide de la clé de chiffrement/déchifrement, cette clé étant enregistrée dans un endroit prédéterminé.

Avantageusement l'invention est aussi caractérisée en ce que le quatrième message est un message en clair.

Avantageusement l'invention est aussi caractérisée en ce que le troisième message comporte un deuxième lien, invisible avant l'activation du premier lien, le deuxième lien étant rendu visible après l'activation du premier lien, le premier lien devenant alors invisible, le deuxième lien pointant vers le quatrième message.

Avantageusement l'invention est aussi caractérisée en ce que le poste de validation est celui servant à la production du premier message.

Avantageusement l'invention est aussi caractérisée en ce que le serveur de validation des réceptions, et le serveur de pièces jointes sont un seul et même serveur.

Avantageusement l'invention est aussi caractérisée en ce que le serveur de validation des réceptions, le serveur de pièces jointes, le poste de formatage et le poste de production du premier message sont un seul et même serveur.

L'invention sera mieux comprise à la lecture de la description qui suit et à l'examen des figures qui l'accompagnent. Celles-ci sont présentées à titre indicatif et nullement limitatif de l'invention. Les figures montrent:
- Figure 1: une illustration d'étapes du procédé selon l'invention pour l'émission d'un message en vu de recevoir un accusé de réception.
- Figure 2: une illustration d'étapes du procédé selon l'invention pour la réception d'un message forçant l'émission d'un accusé de réception.
- Figure 3: une illustration simplifiée d'une infrastructure réseau permettant la mise en oeuvre des étapes du procédé selon l'invention.
- Figure 4: une illustration simplifiée d'un message électronique classique et d'un message électronique tel que produit par les étapes du procédé selon l'invention.

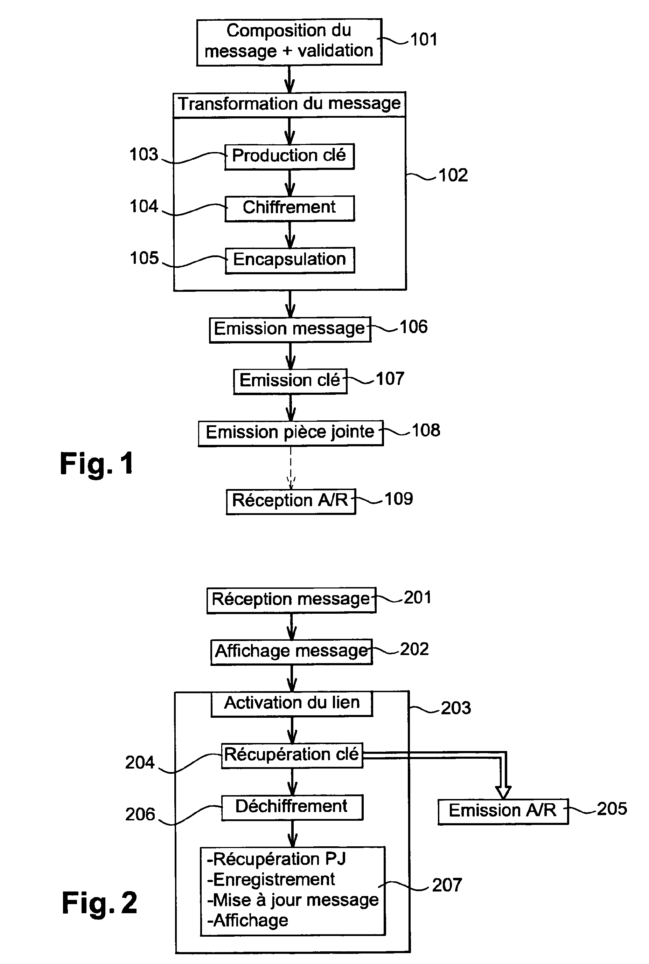

La figure 1 montre une étape 101 préliminaire dans laquelle un utilisateur émetteur utilise un client de messagerie selon l'invention pour produire un message électronique. Le client de messagerie est mis en oeuvre sur un poste 301 comportant au moins un microprocesseur 302 et une mémoire 303 de programme. Le poste 301 comporte bien évidemment d'autres éléments non représentés comme des périphériques d'entrées / sorties. Ces périphériques permettant au moins de saisir, d'afficher et d'émettre sur un réseau des informations. Les éléments 302 et 303 sont interconnectés par un bus 304. Classiquement le poste 301 est un ordinateur individuel, fixe ou portable. D'une manière plus générale le poste 301 est tout dispositif susceptible de mettre en oeuvre un client de messagerie.

La mémoire 303 comporte plusieurs zones, chacune des ces zones comportant des codes instructions pour la réalisation d'une fonction. La mémoire 303 comporte ainsi au moins une zone 303a comportant des codes instructions pour l'édition de messages électroniques, une zone 303b pour la visualisation de messages électroniques, une zone 303d, pour l'émission et la réception de messages électroniques, et une zone 303c pour la transformation selon l'invention de messages électroniques.

Dans la description, lorsqu'une action est attribuée à un dispositif, celle-ci est réalisée par un microprocesseur du dispositif commandé par des codes instructions enregistrés dans une mémoire de programme du dispositif.

Dans l'étape 101, l'utilisateur du poste 301 lance donc l'application correspondant à l'édition d'un message électronique en indiquant qu'il souhaite produire un message électronique permettant de recevoir un accusé de réception fiable. Dans un mode de fonctionnement cette indication peut être implicite, c'est-à-dire, dès qu'un message électronique est produit cela implique que son producteur souhaite recevoir un accusé de réception fiable.

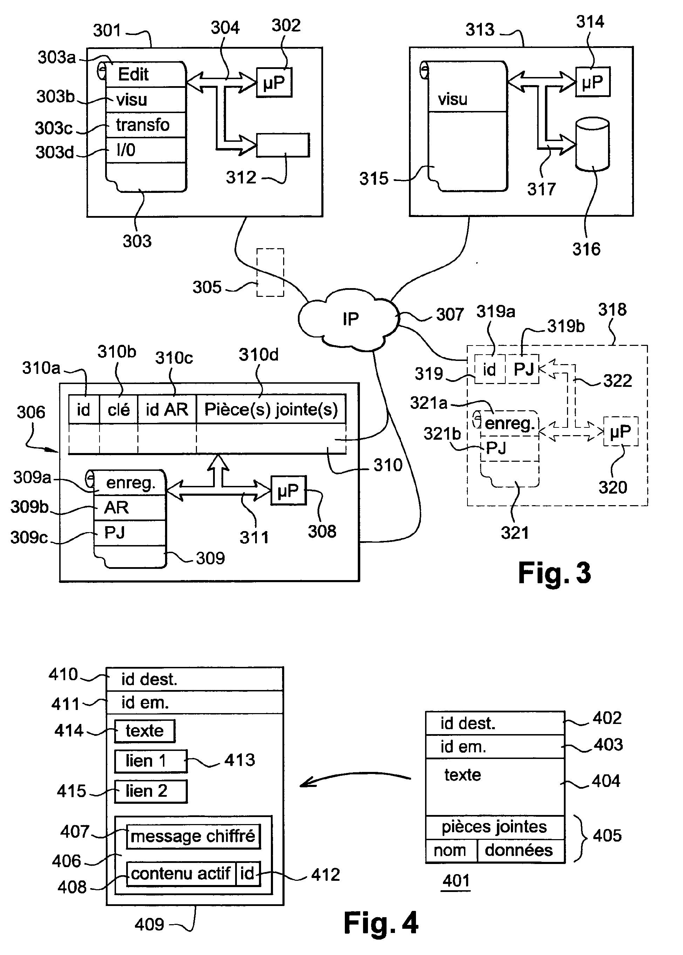

L'utilisateur se retrouve alors face à un éditeur de message et il peut produire un message électronique de manière classique. Un tel message est illustré par la figure 4 qui montre un message 401 électronique tel que composé par l'utilisateur. Le message 401 comporte un champ 402 identifiant de destinataire, un champ 403 identifiant d'émetteur, un champ 404 texte, et, éventuellement, un champ 405 pièces jointes.

Les champs 402 et 403 comportent des adresses de type adresse courriel.

Le champ 404 comporte le texte du message composé par l'utilisateur émetteur, ce texte pouvant être formaté à l'aide de balise HTML par exemple.

Le champ 405, s'il est requis c'est-à-dire si l'utilisateur émetteur souhaite joindre un ou plusieurs fichiers au courrier électronique, comporte la ou les pièces jointes incorporées par l'utilisateur au message 401. Chaque pièce jointe a alors un nom qui correspond à des données.

Une fois le message 401 composé, l'utilisateur émetteur le valide pour émission vers l'utilisateur destinataire.

On passe alors à une étape 102 de transformation du message 401. Dans notre exemple l'étape 402 est mise en oeuvre par le poste 301 lui-même. Le poste 301 est donc, dans cet exemple, le poste transformant le message. Dans la pratique l'étape 402 peut être mise en oeuvre par un serveur 305 mandataire traitant les messages électroniques émis par le poste 301. Le serveur 305 est alors situé sur le trajet du message 401 entre l'émetteur et le destinataire.

Dans l'étape 102 le poste 301 produit, dans une sous étape 103, une clé C de chiffrement / déchiffrement. Cette clé est dite de chiffrement /déchiffrement car dans un exemple préféré le poste 301 va mettre en oeuvre un algorithme de chiffrement symétrique. Dans un tel algorithme la même clé est utilisée pour le chiffrement et le déchiffrement. Cette clé de chiffrement déchiffrement est produite, par exemple, en mettant en oeuvre un procédé de génération de clé pseudo aléatoire. Cette clé est différente pour chaque message.

De la sous-étape 103, le poste 301 passe à des sous-étapes 104 et 105 dans laquelle le poste 301 procède au chiffrement du message 401 et au formatage des informations ainsi chiffrées. Le résultat du chiffrement sert à la production par le poste 301 d'un deuxième message 406. Le deuxième message 406 comporte des données 407 chiffrées et un contenu 408 actif. Le contenu 408 actif est une succession d'instructions permettant au moins de récupérer une clé de chiffrement déchiffrement sur un serveur 306 de validation, d'effectuer le déchiffrement des données 407 chiffrées, d'afficher le résultat de ce déchiffrement, et d'enregistrer localement le résultat du déchiffrement. Le contenu 408 actif ne comporte cependant pas la clé permettant d'effectuer le déchiffrement. Le contenu 408 actif ne comporte donc, entre autre, qu'une implémentation de l'algorithme de déchiffrement complémentaire de l'algorithme de chiffrement utilisé à l'étape 104, mais pas la clé de déchiffrement. Le contenu actif comporte cependant un identifiant 412 d'une clé permettant de retrouver une clé parmi celle enregistrée sur le serveur 306 de validation. Cet identifiant 412 est créé à l'étape 103 en même temps que la clé C. L'identifiant 412 est par exemple la valeur courante d'un compteur comptant le nombre de message produit via le poste 301. Dans une variante l'identifiant 412 est un mot binaire pseudo aléatoire.

Les données 407 correspondent au résultat de l'étape 104 de chiffrement, c'est à dire que les données 407 comportent le contenu du champ 404 chiffré, et éventuellement les noms chiffrés des pièces jointes.

Dans l'invention, le contenu 408 actif est donc apte à effectuer un déchiffrement des données 407 chiffrées.

Dans la pratique le contenu actif est implémenté en utilisant un langage de script tel que javascript ou tout langage correspondant à la norme ECMAscript. De tels langages sont parfaitement interprétés par la plupart des clients de messageries existant. Le message 406 est alors, dans un exemple préféré, une pièce jointe du message 409. Le message 406 est un message au format HTML.

Dans l'étape 105 le poste 301 produit un troisième message 409 comportant entre autre le deuxième message 406.

Le message 409 comporte aussi un champ 410 identifiant de destinataire et un champ 411 identifiant d'émetteur, le contenu des champs respectivement 410 et 411 correspondant au contenu des champs respectivement 402 et 403.

Le message 409 comporte aussi un premier lien 413. Le lien 413 est un lien au sens HTML (Hyper Text Markup Language). C'est à dire que lors de l'affichage du troisième message le lien 413 sera présenté à la personne visualisant le troisième message comme étant un élément activable, c'est à dire un élément que l'on peut sélectionner avec un dispositif de pointage, cette sélection provoquant une réaction de la part du client de messagerie. Selon le langage HTML, un lien correspond à la balise hypertexte <a>. Dans une variante préférée le message 409 comporte aussi un champ 414 texte dont le contenu est du texte permettant de présenter le lien 413. Le champ 414 comporte par exemple le texte suivant: "cliquez sur le lien suivant pour visualiser le message qui vous est adressé.". Le fait de sélectionner le lien 413 provoque l'exécution du script enregistré dans le champ 408. Le lien 413 est, dans un exemple préféré, un lien vers le message 406.

Dans une variante préférée le message 409 comporte un deuxième lien 415 dont les propriétés d'affichage sont telles qu'il est invisible tant que le premier lien n'a pas été activé au moins une fois. Dans cette variante préférée le contenu 408 actif comporte aussi des instructions pour modifier les propriétés d'affichage des liens 413 et 415. Les instructions du contenu 408 actifs sont mises en oeuvre par un poste utilisé par un utilisateur destinataire du message 401 lorsque le premier lien 413 est activé par cet utilisateur. Cela sera décrit ultérieurement.

De l'étape 102 le poste 301 passe à une étape 106 d'émission du message 409. A l'étape 102 le poste 301 a en fait produit un message 409 standard dans sa forme, mais innovant dans sont contenu, comportant un entête avec identifiant de destinataire et d'émetteur et un corps de message formaté, par exemple en HTML. Ce message est donc envoyé comme un message standard par la mise en oeuvre d'un protocole de messagerie tel SMTP ou IMAP pour ne citer qu'eux.

De l'étape 102 le poste 301 passe aussi à des étapes 107 et 108 d'émission de la clé C de chiffrement et des éventuelles pièces jointes.

La figure 3 montre que le poste 301 est connecté au réseau 307 Internet ce qui permet au poste 301 de communiquer avec tous les appareils connectés à ce réseau 307. La figure 3 montre aussi le serveur 306 connecté lui aussi au réseau 307. Dans la pratique le réseau 307 peut aussi être un réseau local.

Le serveur 306 comporte un microprocesseur 308, une mémoire 309 de programme, et une mémoire 310 de clés. Les éléments 308 à 310 sont interconnectés par un bus 311. La mémoire 309 comporte au moins une zone 309a comportant des codes instructions pour l'enregistrement de clés et de pièces jointes, une zone 309b comportant des codes instructions pour l'émission d'accusés de réceptions et de clés, et une zone 309c comportant des codes instructions pour l'émission de pièces jointes.

La mémoire 310 est représentée comme une table. La mémoire 310 permet d'associer à un identifiant 310a, une clé 310b, un identifiant 310c d'émetteur du message, et aucune, une ou plusieurs pièces jointes 310d. A chaque identifiant correspond donc une ligne dans la table 310.

Dans les étapes 107 et 108 le poste 301 produit un message de transmission de clé comportant l'identifiant 412, la clé C, l'identifiant 411 d'émetteur, et éventuellement les pièces jointes incorporées par l'utilisateur émetteur au message 401. Ce message de transmission de clé est alors émis par le poste 301 à destination du serveur 306. Pour ce faire le poste 301 comporte une mémoire 312 dans laquelle est enregistrée l'adresse du serveur 306. Le contenu de cette mémoire 312 est renseigné au moment de l'installation et du paramétrage de l'invention sur le poste 301.

Lorsque le serveur 306 reçoit un message de transmission de clé, le serveur 306 crée une nouvelle ligne dans la table 310. Puis le serveur 306 utilise le contenu du message de transmission pour mettre à jour les champs 310a à 310d de cette nouvelle ligne de la table 310. La colonne 310a correspond à l'identifiant 412. La colonne 310b correspond à la clé C. La colonne 310c correspond à l'identifiant 411 émetteur. La colonne 310d correspond aux pièces éventuellement jointes au message 401.

Ultérieurement, à une date non prédictible, l'étape 108 est suivie d'une étape 109 au cours de laquelle le poste 301 reçoit un accusé de réception indiquant à l'utilisateur du poste 301 que le message 401 a bien été reçu et lu par le destinataire dudit message.

Dans cet exemple de mise en oeuvre de l'invention, le serveur 306 joue les rôles de serveur de validation des réceptions et de serveur de pièces jointes. Dans la pratique ces deux rôles peuvent être attribués à deux serveurs distincts. Dans ce cas le serveur 306 de validation des réceptions associe l'identifiant 310a de message à la clé 310b, et un serveur 318 de pièces jointes associe via une mémoire 319 un identifiant 319a de message à une ou plusieurs pièces jointes 319b. Dans cette variante les identifiants 310a et 319a sont identiques. La table 310 ne comporte pas de colonne 310d, celle-ci devenant la colonne 319b. Dans cette variante le serveur 318 de pièces jointes comporte un microprocesseur 320 et une mémoire de programme 321. Les éléments 319 à 321 sont interconnectés par un bus 322. La mémoire 321 comporte des zones 321 a et 321 b équivalente aux zones 309a et 309c. Dans cette variante toujours le poste 301 de transformation émet deux messages de transmission, un pour la clé au serveur 306, et un pour les pièces jointes au serveur 318.

La figure 3 montre aussi un poste 313 connecté au réseau 307. Dans notre exemple, le poste 313 est le poste utilisé par l'utilisateur destinataire du message 401 pour recevoir et lire les messages qui lui sont destinés.

Le poste 313 comporte un microprocesseur 314, une mémoire 315 de programme, et une mémoire 316 de stockage. Les éléments 314 à 316 sont interconnectés par un bus 317. La mémoire 315 comporte au moins une zone 315a comportant des codes instructions pour la visualisation, et donc l'interprétation, de messages électroniques. Comme le poste 301, le poste 313 comporte des périphériques d'entrées / sorties tels que clavier, écran et dispositif de pointage. Dans la pratique le poste 313 est de même nature que le poste 301 et comporte lui aussi un client de messagerie selon l'invention. On note ici cependant qu'un client de messagerie classique suffit pour la réalisation des étapes de l'invention correspondant à la réception d'un message électronique.

La figure 2 montre une étape 201 au cours de laquelle le poste 313 reçoit le message 409. Ce message est alors enregistré par le client de messagerie installé sur le poste 313. Ce client de messagerie, comme la plupart des logiciels de ce type, comporte une interface de navigation parmi les messages électronique reçus. L'utilisateur du poste 313 est donc apte à retrouver et commander l'affichage du message 409.

De l'étape 201 on passe donc à une étape 202 d'affichage du message 409. Pour l'utilisateur cet affichage se traduit par l'affichage du texte 414 suivi d'un lien correspondant au lien 413, tout le reste du message étant invisible à ce moment. L'utilisateur du poste 313 est donc libre de choisir d'activer le lien 413. Dans une variante cette activation peut être automatique.

En cas d'activation on passe alors à une étape 203 d'activation du lien. Dans l'étape 203 le poste 313 interprète les instructions contenues dans le contenu 408 actif. Le poste 313, commandé par le contenu actif 408, effectue donc les opérations suivantes:
- récupération, dans une étape 204, de la clé identifiée par l'identifiant 412 sur le serveur 306. Le poste 313 produit un message de récupération comportant l'identifiant 412. Le contenu 408 actif comporte aussi l'adresse du serveur 306 sur le réseau 307. Le poste 313 est donc apte à émettre le message de récupération vers le serveur 306. Lorsque le serveur 306 reçoit un message de récupération, il recherche dans la table 310, colonne 31 0a, l'identifiant 412 que comporte le message de récupération. Une fois la ligne correspondante trouvée, le serveur 306 répond au message de récupération par un message comportant la clé 310b contenue dans la ligne trouvée. En même temps le serveur produit et émet, dans une étape 205, un message accusé de réception qui est envoyé à l'adresse contenue dans le champ 310c de la ligne trouvée. Dans l'invention l'émission d'un accusé de réception pour un message est donc provoquée par la récupération d'une clé de déchiffrement par le destinataire du message.
- une fois la clé récupérée le poste 313 l'utilise pour déchiffrer, dans une étape 206, les données 407 chiffrées. Il s'agit là du déchiffrement du troisième message.
- une fois les données 407 déchiffrées le poste 313 passe à une étape 207 d'affichage. Dans l'étape 207, le poste 313 utilise les noms des pièces jointes contenus dans les données déchiffrées à l'étape 206 pour récupérer lesdites pièces jointes sur le serveur 306. Sur le serveur 306 une pièce jointe est identifiée par un identifiant 310a et par un nom. Dans une variante une pièce jointe est identifiée par une URL (Universal Ressource Locator, pour adresse universelle de ressource). Dans cette variante les noms des ressources sont donc remplacés, au moment de la production du message 409, par une URL permettant de les retrouver sur le serveur 306. Dans ce cas le serveur 306 se comporte comme un serveur HTTP (HyperText Transfer Protocol, pour protocole de transfert hypertexte), ou FTP (File Transfer Protocol, pour protocole de transfert de fichier).
- dans l'étape 207 le poste 313 produit un quatrième message, sous forme d'un fichier HTML par exemple, ce quatrième message étant enregistré sur l'unité 316 de stockage de masse. Le quatrième message correspond au message affiché correspondant au résultat du déchiffrement du troisième message, y compris les pièces jointes. Le quatrième message comporte donc essentiellement les données 407 en clair, c'est à dire déchiffrées. Une fois cet enregistrement fait le poste 313 modifie les propriétés d'affichage des liens 413 et 415 du troisième message. Ces propriétés sont modifiées de telle sorte que le lien 413 devient invisible alors que le lien 415 devient visible. Le lien 415 est un lien vers le quatrième message.
- Le quatrième message est affiché sur le poste 313 du destinataire du message.

L'ordre des actions effectuées dans l'étape 207 est indifférent si ce n'est la récupération des éventuelles pièces jointes qui a lieu en premier. De même l'enregistrement du quatrième message a lieu avant la modification des propriétés d'affichage.

Après l'étape 203, l'utilisateur peut toujours utiliser le même client de messagerie pour visualiser le message 409, mais celui-ci n'aura plus la même apparence. Le message 409 sera en effet présenté à l'utilisateur en utilisant les propriétés d'affichage définies à l'étape 207. Le fait de sélectionner le lien visible provoquera alors l'affichage du quatrième message enregistré sur l'unité 316 de stockage. Cela signifie qu'après l'étape 203, le poste 313 n'a plus besoin d'être connecté au réseau 307 pour que l'utilisateur du poste 313 puisse consulter le quatrième message 409. On note que bien que le quatrième message ait été enregistré sur une unité de stockage du poste 313, l'utilisateur dudit poste utilise toujours un client de messagerie standard pour accéder à cet enregistrement.

Le chemin de stockage du quatrième message est connu à la fois du poste émetteur et du poste récepteur par l'intermédiaire d'une variable système initialisée lors de l'installation d'un logiciel mettant en oeuvre le procédé selon l'invention sur les postes 301 et 313. La valeur de cette variable étant au moins connue du poste 313 récepteur. Dans une variante de l'invention, ce chemin est fournit par le poste émetteur 301, et les codes instructions du contenu 408 construisent ce chemin lors de l'étape 207.

Dans l'invention il est donc d'une part impossible d'accéder au contenu chiffré du message 409 (au message 404 original et aux éventuelles pièces jointes) sans s'être connecté au serveur 306, donc sans avoir préalablement provoqué l'émission d'un accusé de réception. D'autre part il est possible d'accéder au message reçu, après déchiffrement, sans être obligé de se connecter au réseau 207. L'invention permet donc la mise en place d'un accusé de réception permettant de garantir que le message a bien été visualisé.

Dans une variante l'identifiant 412 est aussi basé sur l'adresse MAC d'une carte réseau du poste 301. Ce qui permet d'avoir un identifiant unique pour une clé. Dans une autre variante l'identifiant 412 comporte l'identifiant 411.

Dans une variante de l'invention le quatrième message est enregistré chiffré, la clé de chiffrement étant elle stockée à un endroit prédéterminé sur l'unité 316 de stockage. Les codes instructions 408 étant alors apte à retrouver cette clé sur l'unité 316 de stockage. La clé est, par exemple, enregistrée dans un cookie. On rappel ici qu'un cookie est un petit fichier géré par un logiciel navigateur Internet, le cookie permettant de sauvegarder des données relativement à un fichier HTML, dans notre cas relativement au quatrième message.

Dans la pratique un message électronique comporte un champ correspondant à l'objet / sujet de message. Typiquement, dans l'invention, un message accusé de réception tel qu'émis par le serveur 306 comporte donc le sujet de message dont il acquitte la visualisation, mais aussi l'identifiant de la colonne 310a et l'identifiant de la colonne 31 0c.

Dans une variante de l'invention le serveur de validation des réceptions, le serveur de pièces jointes, le poste de formatage et le poste de production du premier message sont un seul et même serveur remplissant toutes les fonctions précédemment décrites.

Dans une variante de l'invention les échanges entre le poste de formatage et le serveur de validation sont chiffrés de préférence en utilisant une technologie de chiffrement asymétrique. Dans cette variante le poste de formatage connaît la clé publique d'une bi-clé propre au serveur de validation. Le poste de formatage utilise cette clé publique pour chiffrer la clé C avant de la transmettre. Dans cette variante c'est le serveur de validation qui se charge du déchiffrement de la clé C.

Dans une autre variante de l'invention les échanges entre le poste de formatage et le serveur de pièces jointes sont chiffrés de préférence en utilisant une technologie de chiffrement asymétrique. Dans cette variante le poste de formatage connaît la clé publique d'une bi-clé propre au serveur de pièces jointes. Le poste de formatage utilise cette clé publique pour chiffrer les pièces jointes avant de les transmettre. Dans cette variante c'est le serveur de pièces jointes qui se charge du déchiffrement des pièces jointes. Dans cette variante il est encore possible de chiffrer, sur le serveur de formatage, les pièces jointes en utilisant une technologie de chiffrement symétrique et une clé C'. Les pièces jointes ainsi chiffrées sont transmises au serveur de pièces jointes. Le poste de formatage transmet aussi au serveur de pièces jointes la clé C', cette clé étant alors chiffrée avec la clé publique associée au serveur de pièces jointes.

## Revendications

1. - Procédé de production d'un accusé de réception fiable dans lequel un utilisateur émetteur d'un message produit (101) un premier message (401) puis le valide (102) pour envoi à un destinataire identifié par une adresse (410) destinataire, l'émetteur étant identifié par une adresse (411) émetteur **caractérisé en ce que:**
- le premier message est transmis (102) à un poste de formatage,
- le poste **de formatage** produit (103) une clé de chiffrement/déchiffrement,
- le poste **de formatage** chiffre (104) le premier message avec la clé de chiffrement/déchiffrement produit, produisant ainsi des informations (407) chiffrées,
- le poste **de formatage,** produit un deuxième message (406) comportant les informations chiffrées et un contenu (408) actif apte à effectuer le déchiffrement des informations chiffrées mais n'ayant pas connaissance de la clé de déchiffrement,
- le poste **de formatage** produit (105) un troisième message (309) comportant le deuxième message et un premier lien (413) dont la sélection permet d'activer le contenu actif du deuxième message, ce premier lien étant visible au moins lors du premier affichage du troisième message par le destinataire du premier message,
- le poste **de formatage** émet (106) le troisième message ainsi formaté à destination du destinataire identifié par l'adresse destinataire par la mise en oeuvre d'un protocole de messagerie,
- le poste **de formatage** émet (107) la clé de chiffrement/déchiffrement vers un serveur (306) de validation des réceptions, le serveur de validation étant apte à émettre (205) un accusé de réception lorsqu'il reçoit une requête pour émettre une clé de chiffrement/déchiffrement, une clé de chiffrement/déchiffrement étant associé à un message formaté.

2. - Procédé selon la revendication 1, **caractérisé en ce que** le premier message comporte au moins une pièce jointe (405) identifiée par un nom, dans ce cas:
- le poste **de formatage** chiffre (104) le nom de pièce jointe avec la clé de chiffrement/déchiffrement produite, et incorpore le résultat du chiffrement aux informations chiffrées,
- le poste **de formatage** émet au moins la pièce jointe vers un serveur (306) de pièces jointes.

3. - Procédé de production d'un accusé de réception fiable dans lequel un utilisateur destinataire d'un premier message reçoit (201) un message (409) via un poste de réception **caractérisé en ce que**:
- le message reçu comporte un premier lien (413) visible au moins lors de la première visualisation du message reçu et activable, l'activation de ce premier lien permettant d'activer un contenu (408) actif d'un deuxième message (406) contenu dans le message reçu, ce deuxième message comportant également des informations (407) chiffrées, le message reçu étant un troisième message,
- une fois le contenu actif activé (203):
- le poste de réception se connecte à un serveur de validation des réceptions pour obtenir (204) une clé de déchiffrement des informations chiffrées, le serveur de validation des réceptions émettant une notification à l'utilisateur ayant déposé la clé de déchiffrement, cette notification valant accusé de réception du premier message,
- le poste de réception déchiffre (206) les informations chiffrées et les présente (207) à l'utilisateur destinataire.

4. - Procédé selon la revendication 3, **caractérisé en ce que** le poste de réception récupère, le cas échéant, des pièces jointes dont les noms sont contenus dans les informations déchiffrées, ces pièces jointes étant enregistrées sur un serveur de pièces jointes.

5. - Procédé selon l'une des revendications 1 à 4, **caractérisé en ce que** une fois la clé de chiffrement et les éventuelles pièces jointes récupérées par le destinataire, le premier message et les éventuelles pièces jointes sont enregistrées (207), en tant que quatrième message, sur le poste de réception ayant servi au destinataire à recevoir le troisième message, cet enregistrement étant réalisé à un endroit prédéterminé d'une unité (316) de stockage du poste de réception.

6. - Procédé selon la revendication 5, **caractérisé en ce que** le quatrième message est chiffré à l'aide de la clé de chiffrement/déchiffrement, cette clé étant enregistrée dans un endroit prédéterminé.

7. - Procédé selon la revendication 5, **caractérisé en ce que** le quatrième message est un message en clair.

8. - Procédé selon l'une des revendications 5 à 7, **caractérisé en ce que** le troisième message comporte un deuxième lien (415), invisible avant l'activation du premier lien, le deuxième lien étant rendu visible après l'activation du premier lien, le premier lien devenant alors invisible, le deuxième lien pointant vers le quatrième message.

9. - Procédé selon l'une des revendications 1 à 8, **caractérisé en ce que** le poste de formatage est celui servant à la production du premier message.

10. - Procédé selon l'une des revendications 1 à 9, **caractérisé en ce que** le serveur de validation des réceptions, et le serveur de pièces jointes sont un seul et même serveur.

11. - Procédé selon l'une des revendications 1 à 9, **caractérisé en ce que** le serveur de validation des réceptions, le serveur de pièces jointes, le poste de formatage et le poste de production du premier message sont un seul et même serveur.

## Claims

1. A method for producing a reliable acknowledgement of receipt in which a user sender of a message produces (101) a first message (401) and then validates (102) this message to send to a recipient identified by a recipient address (410), the emitter being identified by an emitter address (411), **characterized in that**:
- the first message is sent (102) to a formatting station,
- the formatting station produces (103) an encryption/decryption key,
- the formatting station encrypts (104) the first message with the encryption/decryption key produced, thereby producing encrypted information (407)
- the formatting station produces a second message (406) comprising encrypted information and an active content (408) that is capable of decrypting encrypted information but does not have notice of the decryption key,
- the formatting station produces (105) a third message (309) comprising the second message and a first link (413) whose selection activates the active content of the second message, this first link being visible at least during the first display of the third message by the recipient of the first message,
- the formatting station emits (106) the third message thus formatted to the recipient identified by the recipient address by implementing a messaging protocol,
- the formatting station emits (107) the encryption/decryption key to a receipt validation server (306), the validation server being able to emit (205) an acknowledgement of receipt when it receives a request to emit an encryption/decryption key, an encryption/decryption key being associated with a formatted message.

2. The method according to claim 1, **characterized in that** the first message comprises at least one attachment (405) identified by a name, in this case:
- the formatting station encrypts (104) the name of the attachment with the encryption/decryption key produced and incorporates the result of the encryption to the encrypted information,
- the formatting station emits at least the attachment to an attachment server (306).

3. The method of producing a reliable acknowledgement of receipt in which the user recipient of a first message receives (201) a message (409) via a receipt station **characterized in that**:
- the message received comprises a first link (413) that is visible at least during the first display of the received and actionable message, activation of this first link allowing an active content (408) of a second message (406) contained in the received message to be activated, this second message also comprising encrypted information (407), the message received being a third message,
- once the active content is activated (203):
- the receipt station is connected to a receipt validation server to obtain (204) a decryption key for encrypted information, the receipt validation server emitting a notification to the user who had issued the decryption key, this notification is equivalent to an acknowledgement of receipt of the first message,
- the receipt station decrypts (206) the encrypted information and presents (207) the information to the recipient user.

4. The method according to claim 3, **characterized in that** the receipt station recovers, if needed, the attachments whose names are contained in the decrypted information, these attachments being recorded on an attachment server.

5. The method according to one of claims 1 to 4, **characterized in that** once the encryption key and the possible attachments are recovered by the recipient, the first message and possible attachments are recorded (207), as the fourth message on the receipt station having been used as the recipient to receive the third message, this recording being done at a predetermined location of a receipt station storage unit (316).

6. The method according to claim 5, **characterized in that** the fourth message is encrypted by using an encryption/decryption key, this key being recorded in a predetermined location.

7. The method according to claim 5, **characterized in that** the fourth message is a message in clear.

8. The method according to one of claims 5 to 7, **characterized in that** the third message comprises a second link (415) that is invisible before activation of the first link, the second link being made visible after activation of the first link, the first link then becoming invisible, the second link pointing to the fourth message.

9. The method according to one of claims 1 to 8, **characterized in that** the formatting station is that used for producing the first message.

10. The method according to one of claims 1 to 9, **characterized in that** the receipt validation server and the attachment server are one and the same server.

11. The method according to one of claims 1 to 9, **characterized in that** the receipt validation server, the attachment server, the formatting station and the first message production station are one and the same server.

## Patentansprüche

1. Verfahren zum Erzeugen einer zuverlässigen Empfangsbestätigung, bei dem ein Benutzer, der eine Nachricht sendet, eine ersten Nachricht (401) erzeugt (101) und zum Senden an einen Benutzer, der durch eine Empfängeradresse (410) identifiziert ist, bestätigt (102), wobei der Sender von einer Senderadresse (411) identifiziert ist, **dadurch gekennzeichnet, dass**
- die erste Nachricht an einen Formatierungsposten übertragen (102) wird,
- der Formatierungsposten einen Verschlüsselungs-/Entschlüsselungscode erzeugt (103),
- der Formatierungsposten die erste Nachricht mit dem Verschlüsselungs-/Entschlüsselungscode verschlüsselt (104) und daher verschlüsselte Informationen (407) erzeugt,
- der Formatierungsposten eine zweite Nachricht (406) erzeugt, die die verschlüsselten Informationen und einen aktiven Inhalt (408) aufweist, der das Entschlüsseln der verschlüsselten Informationen ausführen kann, den Entschlüsselungscode jedoch nicht kennt,
- der Formatierungsposten eine dritte Nachricht (309) erzeugt (105), die die zweite Nachricht enthält und einen ersten Link (413) aufweist, dessen Auswahl es erlaubt, den aktiven Inhalt der zweiten Nachricht zu aktivieren, wobei dieser erste Link mindestens beim ersten Anzeigen der dritten Nachricht durch den Empfänger der ersten Nachricht sichtbar ist,
- der Formatierungsposten die so formatierte dritte Nachricht an den Empfänger, der durch die Empfängeradresse identifiziert ist, durch Umsetzen eines Mitteilungsprotokolls sendet (106),
- der Formatierungsposten den Verschlüsselungs-/Entschlüsselungscode zu einem Server (306) zum Bestätigen der Empfänge sendet (107), wobei der Bestätigungsserver eine Empfangsbestätigung senden (205) kann, wenn er eine Anfrage auf Senden eines Verschlüsselungs/Entschlüsselungscodes erhält, wobei einer formatieren Nachricht ein Verschlüsselungs-/Entschlüsselungscode zugewiesen ist.

2. Verfahren nach Anspruch 1, **dadurch gekennzeichnet, dass** die erste Nachricht mindestens eine Anlage (405) aufweist, die durch einen Namen identifiziert ist, in diesem Fall:
- verschlüsselt (104) der Formatierungsposten den Namen der Anlage mit dem erzeugten Verschlüsselungs-/Entschlüsselungscode und gliedert das Resultat des Verschlüsselns in die verschlüsselten Informationen ein,
- sendet der Formatierungsposten mindestens die Anlage zu einem Server (306) für Anlagen.

3. Verfahren zum Herstellen einer zuverlässigen Empfangsbestätigung bei dem ein Benutzer, der Empfänger einer ersten Nachricht ist, eine Nachricht (409) über einen Empfangsposten empfängt (201), **dadurch gekennzeichnet, dass**
- die empfangene Nachricht einen ersten Link (413) aufweist, der mindestens beim ersten Anzeigen der empfangenen Nachricht sichtbar und aktivierbar ist, wobei das Aktivieren dieses ersten Links das Aktivieren eines aktiven Inhalts (408) einer zweiten Nachricht (406) erlaubt, die in der empfangenen Nachricht enthalten ist, wobei diese zweite Nachricht ebenfalls eine verschlüsselte Information (407) enthält, wobei die empfangene Nachricht eine dritte Nachricht ist,
- nach dem Aktivieren (203) des aktiven Inhalts:
- schließt sich der Empfangsposten an einen Server zum Bestätigen der Empfänge an, um einen Entschlüsselungscode der verschlüsselten Informationen zu erhalten (204), wobei der Server zum Bestätigen der Empfänge eine Bekanntgabe an den Benutzer sendet, der den Verschlüsselungscode hinterlegt hat, wobei diese Bekanntgabe als Empfangsbestätigung der ersten Nachricht gilt,
- entschlüsselt der Empfangsposten die verschlüsselten Informationen (206) und präsentiert sie dem empfangenden Benutzer (207).

4. Verfahren nach Anspruch 3, **dadurch gekennzeichnet, dass** der Empfangsposten gegebenenfalls die Anlagen, deren Namen in den entschlüsselten Informationen enthalten sind, holt, wobei diese Anlagen auf einem der Servier für Anlagen aufgezeichnet sind.

5. Verfahren nach einem der Ansprüche 1 bis 4, **dadurch gekennzeichnet, dass** die erste Nachricht und die eventuellen Anlagen nach dem Holen des Verschlüsselungscodes und der eventuellen Anlagen durch den Empfänger als vierte Nachricht auf dem Empfangsposten, der dem Benutzer zum Empfangen der dritten Nachricht gedient hat, aufgezeichnet werden (207), wobei diese Aufzeichnung an einer vorbestimmten Stelle einer Speichereinheit (316) des Empfangspostens erfolgt.

6. Verfahren nach Anspruch 5, **dadurch gekennzeichnet, dass** die vierte Nachricht mit Hilfe des Verschlüsselungs-/ Entschlüsselungscodes verschlüsselt wird, wobei dieser Code an einer vorbestimmten Stelle aufgezeichnet ist.

7. Verfahren nach Anspruch 5, **dadurch gekennzeichnet, dass** die vierte Nachricht eine Klarschriftnachricht ist.

8. Verfahren nach einem der Ansprüche 5 bis 7, **dadurch gekennzeichnet, dass** die dritte Nachricht einen zweiten Link (415) aufweist, der vor dem Aktivieren des ersten Links unsichtbar ist, wobei der zweite Link nach dem Aktivieren des ersten Links sichtbar gemacht wird, wobei der erste Link unsichtbar wird und der zweite Link auf diese vierte Nachricht zeigt.

9. Verfahren nach einem der Ansprüche 1 bis 8, **dadurch gekennzeichnet, dass** der Formatierungsposten derjenige ist, der zum Erzeugen der ersten Nachricht dient.

10. Verfahren nach einem der Ansprüche 1 bis 9, **dadurch gekennzeichnet, dass** der Server zum Bestätigen der Empfänge und der Server für Anlagen ein einziger Server sind.

11. Verfahren nach einem der Ansprüche 1 bis 9, **dadurch gekennzeichnet, dass** der Server zum Bestätigen der Empfänge, der Server für Anlagen, der Formatierungsposten und der Posten zum Erzeugen der ersten Nachricht ein einziger Server sind.
